# EUROPEAN PATENT SPECIFICATION

(11) **EP 1 261 479 B1**
(45) Date of publication and mention of the grant of the patent: **16.06.2004**
(21) Application number: 01946814.9
(22) Date of filing: 10.01.2001
(51) Int. Cl.: B32B 25/10, B32B 7/02, D04H 13/00

(54) **EXTRUSION BONDED NONWOVEN/ELASTIC LAMINATE**
DURCH EXTRUSION VERBUNDENES LAMINAT VON ELASTISCHEM MATERIAL UND VLIES
STRATIFIE NON TISSE/ELASTIQUE LIE PAR EXTRUSION

(30) Priority: 28.01.2000 US 493637
(43) Date of publication of application: 04.12.2002
(73) Proprietor: 3M Innovative Properties Company, St. Paul, MN 55133-3427 (US)
(72) Inventor: NYGARD, James, C., Saint Paul, MN 55133-3427 (US); EATON, Bradley, W., Saint Paul, MN 55133-3427 (US); MITCHELL, Sharon, N., Saint Paul, MN 55133-3427 (US); NORQUIST, Scott, G., Saint Paul, MN 55133-3427 (US); WANG, Shou-Lu, G., Saint Paul, MN 55133-3427 (US)
(74) Representative: VOSSIUS & PARTNER
(86) International application number: PCT/US2001/000778
(87) International publication number: WO 2001/054900

(56) References cited:
- EP-A- 0 933 460
- WO-A-98/16380
- US-A- 5 393 599

## Description

The present invention relates to elastic film and nonwoven laminates having controlled elastic properties and a method of producing such laminates.

In order to improve the comfort or aesthetic appearance or provide other properties of an elastic web, it is known to laminate an elastic web to another web material. For example, U.S. Patent No. 4,525,407 describes that to provide an elastomeric composite, it is possible to intermittently bond an elastic member to a substrate which is less easily extensible than the elastic member and which has less elastic recovery than the elastic member. The elastic member can be a film or a reticulated elastic and is intermittently bonded to the generally non-elastic substrate which is described as a film, woven or nonwoven material. The laminate is then stretched, which results in the elastic deformation of the relatively non-elastic material, which then puckers upon recovering of the elastic material. The patent further warns that if the bonding between the elastic member and the relatively inelastic member is not capable of elongation some of the bonds can be disrupted during the stretching. This likely is a result of the relatively inelastic material undergoing deformation and pulling away from the elastic material at the bond sites. A similar point bonding by use of adhesives is taught in U.S. Patent Nos. 5,683,787 and 5,939,178. In the '787 patent, the intermittent bonding is created by thermal or adhesive point contact followed by extension and permanent deformation of the relatively inelastic nonwoven material between the bond points. The'178 patent is similar, however it further requires the use of a debonding material between the point bond locations to ensure that the elastomeric film layer of the attached nonwoven layer are not attached at any other places other than the spaced apart bonding locations. Additionally, the elastomeric sheet and/or the relatively inextensible nonwoven can be predrawn prior to the point bonding of the elastic to a nonwoven by needle punching as described in U.S. Patent No. 4,446,189 with the laminate subsequently elongated as discussed above. Adhesive bonding of an elastic web to an inelastic web is also described, for example in U.S. Patent Nos. 4,935,287; 5,143,679 and 5,921,973, which are limited to the use of adhesive materials to form the lamination. The '287 and '973 patents describe patterned or point applied adhesives where the materials are subsequently stretched to allow activation and gathering between the points of adhesion bonding. The '679 patent describes an adhesive application which can be either intermittent or substantially continuous, allegedly depending on the properties desired.

Prestretching of a neckable nonwoven material followed by bonding to an elastic material is discussed extensively in the series of patents: U.S. Patent Nos. 4,981,747; 5,116,662; 5,226,992; 5,514,470; 5,804,021; 5,883,028; 6,001,460 and PCT/US98/29241. The first mentioned patent '747 describes joining an elastic web material to a reversibly necked material at at least two locations. The reversibly necked material is generally a spunbond nonwoven which has been stretched so as to contract the material in the direction transverse to the stretching followed by heat setting. The exemplified laminates were patterned bonded under heat and pressure, although other bonding methods known in the art are described as suitable. Alternatively, generally 100% heat bonding is also described where the bonding is done between smooth platens at 100°F (38°C) and 15,000 psi (103 MPa) with a polypropylene spun bond material bonded to a sheet of melt blown KRATON G elastomeric fibers. The resulting laminates allegedly are extensible in the cross direction to about 140 percent (compared to over 500 percent for the elastic web) but not the machine direction. The '662 patent describes point bonding in a nonlinear pattern where an elastic web is pointed bonded to a necked nonwoven material. U.S. Patent No. 6,001,460 describes point bonding under sufficient pressure so that the elastomeric polymer sheet material melts and flows into a nonwoven fabric sheet encapsulating the nonwoven fabric fibers. The nonwoven is again a necked material. This method is addressed at the problems associated with attempts to bond two dissimilar materials which do not have natural adhesion to each other, (the exemplified combinations of polypropylene spunbond and KRATON G elastomers described in the earlier patents are able to be readily heat bonded). The '028 patent describes a specific laminate where the elastic is a breathable film forming polymer which is attached to the necked nonwoven material. Again, the bonding method is described as any suitable means including thermal. or ultrasonic or adhesive point bonding. U.S. Patent No. 5,914,084 is another patent describing joining a necked nonwoven to an elastic web, no specific bonding method is described. U.S. Patent No. 5,514,470 describes the possibility of extrusion laminating an elastic nonwoven or film onto a necked nonwoven material between two pressure rolls where the gap between the pressure rolls is adjusted. The nonwoven is a necked material as described above. Generally, the patent indicates that opening the gap decreases the force required to extend the composite material by 25% or more as compared to a pressurized nip. The Examples indicate that the adhesion between the necked material and the elastic film is from 7.3 to 9.7 kg/in² (11 to 15 N/cm²; Examples 15-20). The elastic film was a blend of a KRATON G with polyethylene and Regalrez™ 1126. The exemplified nonwovens were necked spunbond webs formed of polypropylene fibers. Generally with all these patents, extensibility of the laminate for the exemplified laminates is limited approximately to the degree of necking provided by the reversibly necked nonwoven.

U.S. Patent No. 5,804,021 describes a specific nonwoven web which has a plurality of slits allowing the web to be easily stretched by opening of the slits in the direction of stretching. The slits must extend transverse to the stretching direction. The slits can be either continuous or intermittent slits. The slit nonwoven is attached to a elastic web which is accomplished by "suitable means" which is described as ultrasonic bonding, infrared bonding, radio frequency bonding, powder adhesive bonding, hydroentangling, mechanically entangling, or extrusion lamination. Extrusion lamination in a drop die between a chrome roll and a rubber roll is exemplified with the alleged material allegedly having elastic properties only in the cross direction, in line with the slits. The material stretches by expansion of the slits.

The use of extrusion lamination to join a nonelastic thermoplastic film to a fibrous nonwoven material is described generally in European Patent No. 187,725 and U.S. Patent No. 4,753,840. The problem to be avoided in these patents is a complete penetration of the thermoplastic film into the nonwoven or other fabric being extrusion laminated to the film resulting in decreased softness of the laminate. Generally, the conditions described are extruding the thermoplastic film into a nip formed between a chilled smooth roll and a rubber back-up roll at a nip pressure from about 60 to 120 psi (about 410 to 830 kPa). This allegedly results in a limited penetration of the thermoplastic material into the fibrous material at a depth of less than one-half the thickness of the fibrous material to provide adequate bonding between the layers. Nip pressures below 60 psi (410 kPa) are not recommended allegedly due to the relatively poor adhesion between the thermoplastic film and the fibrous web. The thermoplastic film described is not elastomeric and the resulting laminate was not intended to be subsequently stretched. U.S. Patent No. 5,908,412 describes forming an inelastic film and nonwoven laminate with improved softness using a polyethylene film as a blocking layer. The lamination to nonwoven is under conditions where a gap is set between a chrome roll and a rubber roll. The polyethylene film is "coated" to provide a laminate that has a peel of less than 98 • 10⁻³ kN/m.

Extrusion lamination of a thermoplastic film to a nonwoven, which laminate is then subsequently stretched in "ring-rolling processes" are described in U.S. Patent Nos. 5,422,172 and 5,382,461, which describe respectively lamination of a thermoplastic elastomeric film and a thermoplastic plastic film. The extrusion lamination process is similar to that described in the above '840 patent, however, the nip pressures described in the '172 patent are between 10 to 80 psi (69 to 552 kPa) which pressures are described as sufficient to achieve a satisfactory bond for fibrous webs having basis weights of about 10 to 60 grams per square yard (about 12 to 72 g/m²). The Examples in the '172 patent demonstrate that this bonding level resulted in a total bond between the elastic film and the nonwoven material, meaning that the elastic and the nonwoven cannot be separated. The laminates were stretched in the examples by 100 percent or less. The objective of the present invention is to provide an elastic film/nonwoven laminate that has an improved combination of softness, high extensibility, good elasticity such that the laminate can be stress activated at relatively high elongation without delamination or breaking of the laminate and which can be directly and easily made by extrusion lamination.

The invention relates to an extrusion bonded nonwoven elastic film laminate comprising a elastomeric film having a thickness of 300 µm or less directly bonded to at least one nonwoven web layer. The bonding level is substantially continuous over at least a portion of the laminate forming an extensible portion. The extensible portion is extensible in at least one direction, and has elongation to break of at least 250 percent, a stress at 100 percent elongation of greater than 300 N/cm². The outer surface of the elastomeric film is directly bonded to the fibers of the nonwoven web without an intervening adhesive layer. The laminate has a useful extension range of greater than 100 percent which permits the laminate to be extended and recovered to at least this extent to form an elastic laminate without delamination or breakage of the nonwoven web. Furthemore, the nonwoven web is not a necked nonwoven web or preslit nonwoven.

Fig. 1 is a schematic view of a process for producing the invention laminate.

Fig. 2 is a schematic view of an alternative process for producing an invention laminate.

Fig. 3 is a graph of stress-strain characteristics of the invention laminates.

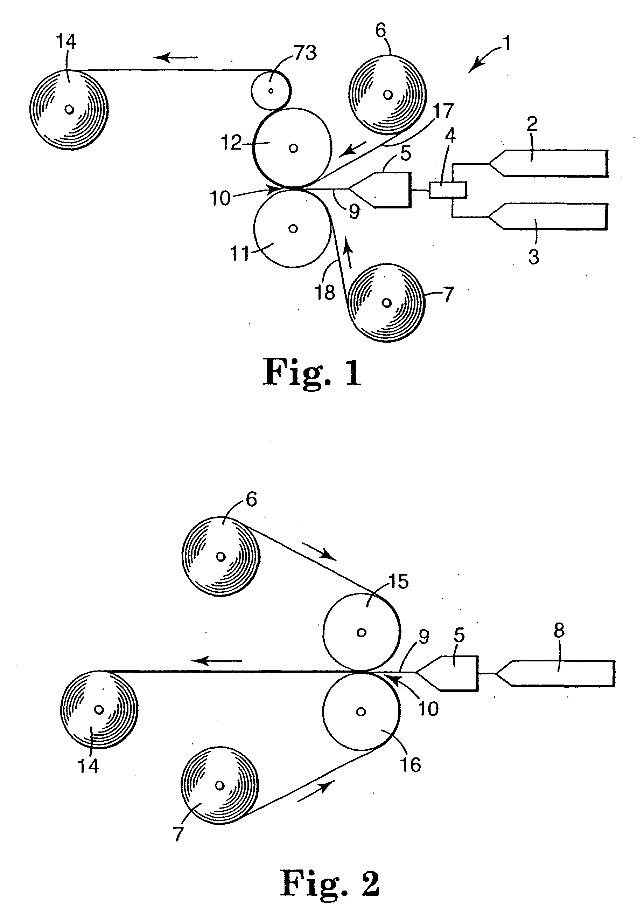

Referring to Figs. 1 and 2 of the drawings, there are schematically illustrated processes for forming a composite elastic film nonwoven laminate material in accordance with the invention. In Figs. 1 and 2, a nip 10 is formed between a generally smooth calender roll, 11 or 16, and a smooth rubber roll, 12 or 15. One or both of the calender rolls (11, 16) may be heated, the gap 10 between the two rollers may be adjusted by well-known means. Although not necessary, and generally not preferred, one or both rolls can be provided with a hard surface. However, the selection of roll surface has little or no effect on the end product, as the roll arrangement is generally provided without any significant pressure in the nip or gap 10 between the rolls (11, 12, 15, 16).

Generally, the gap or nip setting 10 between the rolls is set from 0 to 15,000 µm, preferably 300 µm to 7500 µm where this roll gap is from 50% to a level above the nominal thickness of the layers prior to lamination. Alternatively, the thermoplastic elastomer can be extruded onto a single roll or onto the nonwoven material, which nonwoven material is maintained under tension of from 5 to 100 g/cm-width, preferably between a supply roll and a take-up roll, and wrapped around from 1 to 75% of the surface of the calender roll. This web tension generates sufficient pressure on the nonwoven web to assure adequate bonding to the extruded thermoplastic elastomer film. Generally, the calender rolls are maintained at a temperature from 5°C to 50°C. The thermoplastic elastomeric film is extruded from a die 5 into the nip 10 as a melt stream 9. The polymers forming the film are fed via a single extruder 8 for a single layer film or two or more extruders (2, 3) as shown in Fig. 1 for a multilayer elastomeric film, which layers can be formed in a feedblock 4 as is known in the art. Tension is provided on the nonwoven webs 17 or 18, fed from supply rolls 6 and 7 by a take-up roll 14 as shown in Figs. 1 and 2. The formed laminate can wrap around one of the calender rolls as shown in Fig. 1 using an idler roll 73 or be directly fed to the take-up roll 14. Wrapping the just formed laminate around a calender roll can be used to create a minor amount of pressure to increase the bond level if needed.

The nonwoven extensible layer can be any extensible nonwoven such as a spunbond web, a melt blown web, a spunlace web, a bonded carded web, a Rando web, a resin bonded web or the like, most preferably the web is a bonded carded web or other like adhesively or thermally point bonded webs. With point bonded webs, preferably the web is point bonded over less than 30 percent of its surface area, preferably less than 10 percent. Generally, the nonwoven material is one which is extensible in at least one direction to at least 75%, preferably 300%, preferably this is the cross direction of the web. The nonwoven web is not a necked nonwoven web or preslit nonwoven. Necked webs and the like, although capable of providing good elastic laminates, require additional process steps prior to the extrusion lamination and are difficult to handle during the extrusion lamination due to their poor tensile stability in the cross direction. Necked and slit nonwovens are generally unstable in the necked or slit direction due to their low elongation forces. Similarly, spunlace webs are less preferred as they are only weakly bonded by mechanical entanglement and are more difficult to handle in the extrusion lamination due to their relatively low stability.

The extensible nonwoven material is formed at least in part of thermoplastic polymers. Suitable thermoplastic polymers include polyolefins, polyamides or polyesters, preferably polyolefins and most preferably at least in part a polypropylene polymer or blend. Alternatively, the extensible nonwoven can be a composite material formed by a blend of two or more different fibers such as pulp, staple fibers or containing particulate materials. The individual fibers may be formed from a single polymer or blend or alternatively be multi-layer fibers formed by a melt process such as described in PCT publication NO 99/028402 (U.S. Patent Application Serial No. 08/980,924; U.S. Patent No. 6,107,222) to Joseph et al.

The thermoplastic fibers of the extensible nonwoven layer can be made by a variety of melt processes, including fiberspinning, a spunbond process, or a melt-blown process. In a spunbond process, fibers are extruded from a polymer melt stream through multiple banks of spinnerets onto a rapidly moving, porous belt, for example, forming an unbonded web. This unbonded web is then passed through a bonder, typically a thermal bonder, which point bonds some of the fibers to neighboring fibers, thereby providing integrity to the web. To provide an extensible web preferably fewer bonds are provided. In a melt-blown process, fibers are extruded from a polymer melt stream through fine orifices using high air velocity attenuation onto a rotating drum, for example, forming an autogenously bonded web. In contrast to a spunbond process, no further processing is necessary.

To tailor the properties of the nonwoven web, one or more polymers can be used to make conjugate fibers. These different polymers can be in the form of polymeric mixtures (preferably, compatible polymeric blends), two or more layered fibers, sheath-core fiber arrangements, or in "island in the sea" - type fiber structures. Generally, a fiber component with good bonding characteristics to the elastic film will provide at least a portion of the exposed outer surface of a multicomponent conjugate fiber. Preferably, with multilayered conjugate fibers, the individual components will be present substantially continuously along the fiber length in discrete zones, which zones preferably extend along the entire length of the fibers.

In polymeric mixtures (e.g., polymeric blends), the different polymers may or may not be compatible with each other, as long as the overall mixture is a fiber forming composition. Examples of suitable melt processable polymers or copolymers include, but are not limited to, acrylates; polyolefins such as polyethylene, polypropylene, polybutylene, polyhexene, polyoctene; polystyrenes; polyurethanes; polyesters such as polyethyleneterephthalate; polyamides such as nylon; natural or synthetic rubber resins such as styrenic block copolymers of the type available under the trade designation KRATON (e.g., styrene/isoprene/styrene, styrene/butadiene/styrene); epoxies; vinyl acetates such as ethylene vinyl acetate; polydiorganosiloxane polyurea copolymers; copolymers thereof and mixtures thereof.

The fibers can include an adhesion or bond promoting component in the composition comprising polymers or copolymers selected from the group of acrylates; polyolefins; tackified natural or synthetic rubber resins; vinyl acetates; polydiorganosiloxane polyurea copolymers; and mixtures thereof. Suitable melt processable bonding agents are described in U.S. Patent No. 5,855,499. Examples of bonding agents include tackifiers such as hydrogenated hydrocarbon resins, synthetic tackifying resins or terpene hydrocarbons. Other bonding agents include polyamides, ethylene copolymers such as ethylene vinyl acetate (EVA), ethylene ethyl acrylate (EEA), ethylene acrylic acid (EAA), ethylene methyl acrylate (EMA) and ethylene normal-butyl acrylate (ENBA), wood rosin and its derivatives, hydrocarbon resins, polyterpene resins, atactic polypropylene and amorphous polypropylene. Also included are predominately amorphous ethylene propylene copolymers commonly known as ethylene-propylene rubber (EPR) and tough polypropylene (TPP).

Also, other polymers or copolymers may be mixed with these polymers or copolymers including those selected from the group of polystyrenes; polyurethanes; polyesters; polyamides; epoxies; copolymers thereof and mixtures thereof.

Suitable nonwovens generally have a thickness of from 100 µm to 300 µm and a basis weight of from 10 to 60 g/m², preferably 15 to 50 (g/m²). Preferred are intermittent or discrete length fiber webs such as bonded carded webs or resin bonded webs, formed preferably at least in part of polypropylene fibers or fibers having polypropylene in a layer or blend.

The elastomeric film would be made from any suitable thermoplastic elastomer which could be extruded into film form such as ABA block copolymers, polyurethanes, polyolefin elastomers, polyurethane elastomers, EPDM elastomers, polyamide elastomers, polyester elastomers, or the like. Preferably, the elastomer is a ABA block copolymer elastomer where the A blocks are polyvinyl arene, preferably polystyrene, and the B blocks are conjugated dienes specifically lower alkylene diene. The A block is formed predominately of monoalkylene arenes, preferably styrenic moieties and most preferably styrene, having a block molecular weight distribution between 4,000 and 50,000. The B block(s) is formed predominately of conjugated dienes, and has an average molecular weight of from between about 5,000 to 500,000, which B block(s) monomers can be further hydrogenated or functionalized. The A and B blocks are conventionally configured in linear, radial or star configuration, among others, where the block copolymer contains at least one A block and one B block, but preferably contains multiple A and/or B blocks, which blocks may be the same or different. A preferred block copolymer of this type is a linear ABA block copolymer where the A blocks may be the same or different. Also preferred are other multi-block (block copolymers having more than three blocks) copolymers having predominately A terminal blocks. These preferred multi-block copolymers can also contain a certain proportion of AB diblock copolymer. AB diblock copolymer tends to form a more tacky elastomeric film. Generally, the amount of diblock is less than 70 percent, preferably less than 50 percent of the elastomer portion of the elastic film. Other elastomers can be blended with the block copolymer elastomer(s). provided that they do not adversely affect the elastomeric properties of the elastic film material. A blocks can also be formed from α-methyl styrene, t-butyl styrene and other predominately alkylated styrenes, as well as mixtures and copolymers thereof The B block can generally be formed from isoprene, 1,3-butadiene or ethylene-butylene monomers, however, preferably is isoprene or 1,3-butadiene. Bonding agents, such as described for the nonwoven fibers, can also be blended into the elastomeric film.

The overall thickness of the elastomeric film formed is generally from 20 to 300 µm µm, preferably 25 to 100 µm. If the elastic film material thickness is greater than 300 µm the material would be too difficult to elongate making it unsuitable for use in limited use garments and the like for which the invention elastic laminate material is designed. If the film thickness is less than 20 µm, generally the elastic force provided is insufficient. The stress required to stretch the elastic film to 100 percent, is less than 300 N/cm², preferably less than 250 N/cm². Other conventional additives such as dyes, pigments, antioxidants, antistatic agents, bonding aides, heat stabilizers, photo stabilizers, foaming agents, glass bubbles and the like can be used as required in any portion of the elastomeric film.

The elastomeric film can also be a multilayer elastic film construction such as disclosed in U.S. Patent Nos. 5,501,675; 5,462,708; 5,354,597 and 5,344,691. These references teach various forms of multilayer or coextruded elastomeric laminates, with at least one elastic core layer and either one or two relatively inelastic skin layers.

The skin layers are preferably formed of any semicrystalline or amorphous polymer or blends including these types of materials which is less elastomeric than the elastic core layer and which will undergo relatively more permanent deformation than the core layer at the percentage that the coextruded elastic laminate is stretched. Slightly elastomeric materials such as olefinic elastomers, e.g., ethylene-propylene elastomers, ethylene propylene diene polymer elastomers, metallocene polyolefin elastomers or ethylene vinyl acetate elastomers can also be used. Preferably, the skin layers exhibit enhanced adhesion to the nonwoven web and are polyolefinic, formed predominately of polymers such as polyethylene, polypropylene, polybutylene, polyethylene-polypropylene copolymer, however, these skin layers may also be wholly or partly polyamide, such as nylon, polyester, such as polyethylene terephathalate, or the like, and suitable blends thereof.

Generally, the elastic layer to skin layer thickness ratio will be at least 3, preferably at least 5 but less than 1000. An extremely thin skin layer can be employed such that the multilayer elastomeric material exhibits substantially complete elastic properties when initially stretched. If skin layers are used, the elastic film layer can contain additional materials in the elastomer portion that would increase the elastic layer's tackiness. Such additives would include diblock copolymers as discussed above, other tack-modifying elastomers such as polyisoprenes, tackifiers, oils, liquid or low molecular weight resins and the like. These tack-modifying materials can assist in the skin layer to core layer adhesion or could be used to modify elastomeric properties, extrusion properties or be used as extenders. When the material is directly extrusion coated onto a nonwoven material the nonwoven is generally brought in less than 2 seconds after the film is extruded from the die tip so as to contact the nonwoven while it is still substantially in a heat softened state.

The elastomeric film material may also comprise an elastic polymeric core region, which provides the elastomeric properties to the elastomeric film material within a polymeric matrix, as described in U.S. Patent No. 5,429,856. This elastomeric film material is preferably prepared by coextrusion of the selected matrix and elastomer polymers. The matrix polymer generally surrounds one or more regions formed of the elastomer and is formed of the same materials described as suitable for forming the skin layers of the above multilayer elastic film laminates.

Thin tie layers can also be formed on the elastomeric film or between an elastomer. layer and a skin or matrix layer. Such tie layers can be formed of, or compounded with, typical compounds for this use including maleic anhydride modified elastomers, ethyl vinyl acetates and olefins, polyacrylic imides, butyl acrylates, peroxides such as peroxypolymers, e.g., peroxyolefins, silanes, e.g., epoxysilanes, reactive polystyrenes, chlorinated polyethylene, acrylic acid modified polyolefins and ethyl vinyl acetates with acetate and anhydride functional groups and the like, which can also be used in blends or as compatibilizers or bond promoting additives.

The elastomeric film can also have pressure-sensitive adhesive properties by suitable incorporation of tackifying resins into the elastic material layer provided that the elastomeric properties are not lost. Generally, suitable tackifiers include hydrogenated hydrocarbon resins and tackifying oils. These tackifiers can also be bond promoting additives as discussed above.

A nonwoven layer can be attached to one or both sides of the elastomeric film layer. The interface between the elastomeric film and the nonwoven is generally provided so that the two layers are in substantially continuous and direct contact over the entire extensible portion of the laminate. In alternative embodiments, substantial portions of the laminate could also be provided with other bonding characteristics providing different bonding and elastic properties as are known in the art. The extensible portion of the laminate, which is extrusion bonded in accordance with the invention, is extensible to at least 250%, preferably 300%. This allows the laminate to be easily extended by deformation of the nonwoven layer(s) and subsequently recovered by the elastomeric properties of the elastomeric film. Generally, the amount of permanent set of the extensible portion is less than 20%, preferably less than 10%, at a extension of 150%. The laminate material generally should have an internal cohesion of from 2 to 30 N/cm², preferably 4 to 25 N/cm², as defined in the Examples. The laminate material following activation to at least 100% should be readily extensible up to the point of initial deformation at a substantially reduced tension.

It has been found that for laminates to be adequately bonded, the internal cohesion of the elastic film to the nonwoven prior to the initial stretching should be less than 30 N/cm², but preferably greater than 2 N/cm², and preferably less than 2.5 N/cm². At bond levels greater than 30 N/cm² the laminate tends to break at relatively low elongations of less than 250 to 150 percent and/or has greater stiffness. Generally, the stiffness of the laminate is preferred to be less than 700 N/cm, preferably less than 600 N/cm, most preferably less than 500 N/cm. At bond levels below the above range, the laminate following stretching to 150% or more tends to delaminate easily, in particular after repeated cycling (stretching and recovery). The bond level of the nonwoven web to the elastomeric film, and elastic performance, can also be characterized by the stress-strain characteristics of the laminate and its elastomeric film. The elastomeric film is generally characterized by a relatively low stress where the stress at 100 percent elongation (S₁^{o}) is generally less than 300 N/cm², preferably less than 250 N/cm², and the stress at 250 percent elongation (S₂^{o}) is generally less than 500 N/cm², preferably less than 400 N/cm². The stress of the elastic laminate at 100 percent elongation (S₁) is preferably substantially greater than that of the elastomeric film, generally by 150 percent, preferably more than 200 percent and is preferably greater than 300 N/cm². At S₁ values less than 300 N/cm² the laminate generally is attached to a nonwoven that does not provide sufficient strength to the laminate and is difficult to handle or the elastic film is too weak to be useful. However, S₁ is preferably less than 1200 N/cm². S₂ likewise is substantially greater than S₂^{o}, preferably by 150 percent, most preferably by 200 percent. S₂ is preferably equal to or greater than S₁ (preferably at least 10 percent greater, more preferably at least 20 percent greater) and is preferably 400 N/cm² or greater, preferably 450 N/cm² or greater. The incremental elongation stress(es) preferably continuously increases (increase) from 100 percent to the final activation extension. The final activation extension is generally greater than 100 percent preferably 150 percent or more and most preferably 200 percent or more. A decrease in the incremental elongation stress of the laminate is generally characteristic of at least a nominal break or tear of the nonwoven web. A more substantial break and delamination is characterized by a greater decrease in the incremental stress. Generally, to provide a web having a useful activation extension range of greater than 100 percent, where the useful extension range is that portion of the laminate extension where there is little or no breakage of the nonwoven web, the S₂/S₁ ratio (as defined in the examples of the unstretched laminate), should also be greater than 0.5, preferably greater than 1.0. The useful activation range is generally the portion of the extension range where the incremental elongation stress is continuously increasing up to the point of breakage or a significant decrease in the incremental stress. The useful extension range must be greater than the final activation extension and is likewise preferably greater than 150 percent, most preferably greater than 200 percent. Further, the ability for the laminate to extend beyond its final activation extension or useful extension range is desirable in providing a web that is suited to continuous manufacturing processes where a large degree of tolerance is desired. If the laminate broke at relatively low extensions, this could have serious negative consequences in a continuous manufacturing environment. The elastic laminate web as such has a break elongation of greater than 250%, preferably greater than 300% and most preferably greater than 350 percent. The preferred embodiments would have useful extension ranges within these high break elongation range, and preferably would have a useful extension range up to the break elongation. In use the laminate would be extended to only up to 80 percent or less of the total useful extension range preferably 70 percent or less.

In the manufacturing process to make the invention laminate a nonwoven web is provided close to or adjacent the extrusion die forming the elastomeric film. The elastomeric film is contacted with the nonwoven web while still heat softened. The heat softened elastomeric film is contacted with the nonwoven with substantially no externally applied pressure such that the elastic film material substantially does not penetrate the interfibrous space between the fibers of the nonwoven web providing an overall soft laminate material prior to and alter elastic activation. However, a small pressure (e.g., up to 10 psi = 69 kPa) could be applied and still create a useful laminate depending on the nonwoven selected. With the preferred nonwovens, no pressure is applied in the lamination process. The materials forming the nonwoven web and the elastomeric film are selected to provide the above overall laminate properties at the extrusion lamination conditions. For example, the use of bonding agents or compatible polymer can be used to increase the internal cohesion of the elastic film and the nonwoven web and if necessary debonding or release agents can be used if needed to decrease the internal cohesion of the nonwoven web and elastic film to be within the desired range. The nonwoven web is generally not prestretched so it should be deformed to provide the laminate extensible portion with elastic properties. The elastic activation up to the final activation extension is accomplished by a known means of stretching the laminate either manually or mechanically such as between diverging disks, between intermeshing rollers or other known means such as described in U.S. Patent No. 5,424,025 to Hanschen et al.

Although the laminate can be extensible over its entire length preferably only a portion of the laminate need be provided with the extensible properties of the invention laminate (i.e., the extensible portion). The nip can be provided with different zones to provide higher pressure regions providing more intimate bonding between the nonwoven web and the elastomeric film or patterned bonded characteristics as are known in the art. Generally, the extensible portion of the laminate in accordance with the invention will be extended for at least 5 mm, preferably at least 10 mm over a given length of a laminate. There can be one or more extensible portions on a given laminate with intervening portions with different bonding characteristics.

### Test Methods

### Internal Cohesion Test

Adhesion between the nonwoven layer(s) and the elastic film was determined utilizing an internal cohesion test. A 51 mm by 102 mm sample of laminate to be tested was adhered with double-sided adhesive tape Scotch™ 409 to a 51 mm by 102 mm by 6.4 mm thick aluminum test platen. The laminate was pressed down onto the double-sided tape firmly by hand. A second platen, 25 mm by 25 mm, was prepared by affixing a 25 mm by 25 mm piece of double-sided tape to the flat bottom surface. The second platen was then centrally placed onto the laminate on the first platen, and then pressed firmly against the first platen for 60 seconds at 120 psi (830 kPa) pressure. The first platen (with the laminate and second platen attached) is then mounted in the lower jaws of a tensile testing machine (Instron™ Model 55R1122). The second platen is then mounted to the upper jaws of the tensile testing machine by means of a rigid hook attached to a flexible loop of nylon cord looped through a hole machined into a vertical flange upstanding from the flat lower base of the second platen. The flexible loop and rigid hook assembly provides for a more uniform distribution of force to the flat bottom side of the second platen as the upper jaw travels upward. A crosshead speed of 51 cm/min was used. As the upper jaw travels up, the nonwoven layer separates from the elastic layer. The peak load in kilograms needed to totally separate the nonwoven layer from the elastic layer is measured and reported in Table 2 as kg/cm² (and N/cm²). Laminates were tested before and after activation. Three replicates were tested and averaged.

### Stiffness

A compression test was used to measure the stiffness of the laminates of the invention. A sample was cut from the laminate, 30 mm wide by 150 mm long, the long direction being in the cross or transverse direction of the laminate. A cylinder was formed from this sample by bringing together the two ends, overlapping them by approximately 4 mm, and affixing 3 pieces of 3M Scotch™ Magic™ Tape 810 (19 mm long by 3 mm wide) to the overlap, one near each edge and one in the middle. The cylindrical sample was placed on a platen mounted to the lower jaw of an Instron™ Model 5500R constant rate of extension tensile machine. A plastic ring with a 45 mm outer diameter, 40 mm inner diameter and 5 mm thickness was then placed inside the cylindrical sample such that it rested on the platen. The ring serves as a shape retaining means as the sample cylinder is compressed. The upper jaw of the tensile machine was equipped with a flat compression plate. This plate was lowered at a rate of 10 mm/min. The load to compress the sample was continuously recorded. The peak recorded load, which represents the force required to buckle the sides of the sample cylinder, divided by the thickness of the film of the laminate, is reported in kg/cm (and N/cm) in Table 2 below as Compression Stiffness. Three replicates were tested and averaged. Test sample replicates exhibiting multiple peaks were discarded.

### Stress-Strain Properties

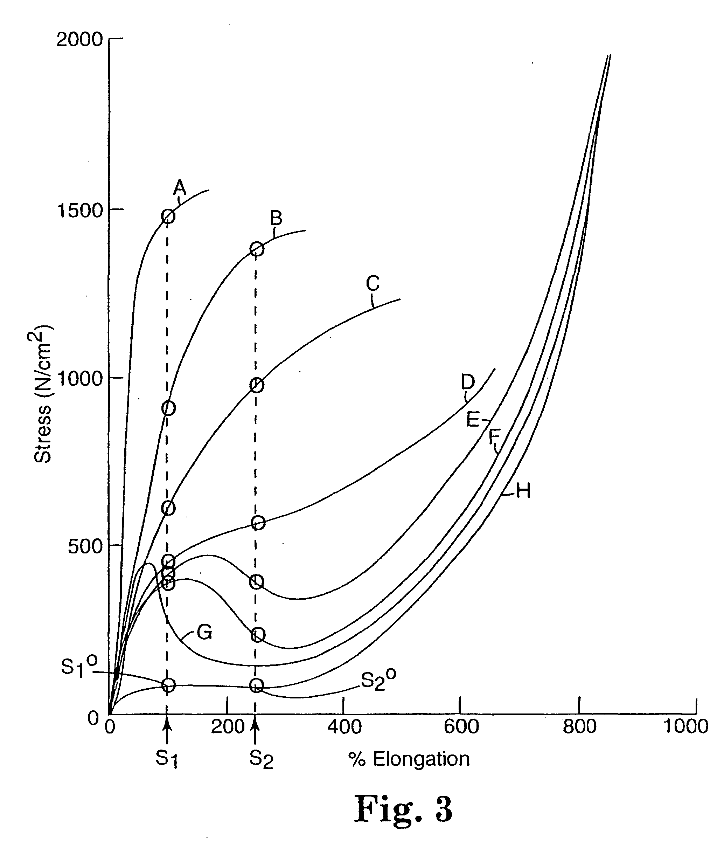

To evaluate the stress-strain properties of the laminates of this invention, tensile testing was performed using a modified version of ASTM D882 with an Instron™ Model 5500R constant rate of extension tensile machine. A sample was cut from the laminate, 25 mm. wide by 76 mm long, the long direction being in the cross direction of the laminate. The laminate was tested in the cross direction. The sample was mounted in the jaws of the test machine with an initial jaw separation of 76 mm. The jaws were then separated at a rate of 51 cm/min until the break point of the sample was reached. The loads at 100% elongation and 250% elongation were recorded. After the 100% load is reached, the sample may exhibit a yield point (a point where the instantaneous stretch decreases with elongation), which usually occurs when the nonwoven layer(s) break in a localized area. For those samples exhibiting a yield point, the decrease in load reaches a minimum after which the load starts to increase as the sample is drawn to higher elongations. The sample eventually breaks with a break elongation (E1). An idealized depiction of possible stress versus elongation curves are shown in Fig. 3.

For those samples exhibiting a yield point, the yield point occurs at elongations greater than 100%. A laminate with a higher yield elongation results in a material that can be activated to a higher degree without having significant localized breakage of the nonwoven. Some laminates due to the nature of the nonwoven used, and the level of bond between the nonwoven layer(s) and elastic film, exhibit a yield point at elongations less than 100%. For the comparative examples and the examples of the invention, it was recorded whether or not there was a yield point followed by a load/stress decrease, and the elongation at which the yield point occurred. More than one yield point may be observed in the three layer laminates due to the fact that the nonwoven on one side of the laminate may have slightly different tensile properties than the nonwoven on the opposite side, and or, the bond between the film and nonwoven on one side is slightly different than the bond between the film and nonwoven on the opposite side.

For laminates that have a poor bond between the nonwoven layer(s) and the elastic film, the nonwoven layer(s) will separate from the elastic film at or near the yield point of the nonwoven layer. The nonwoven layer(s) fail quite dramatically following the yield point with a commensurate sharp decrease in load in (see Fig. 3 curves E, F and G). This failure can occur at a relatively sharp line across the sample. After the failure of the nonwoven, only the elastic film remains to absorb the load. As the sample is further extended, the broken nonwoven layer(s) further separates from the elastic film as the relatively inelastic nonwoven undergoes deformation and pulls away from the elastic film at the bond sites between the fibers and the film. Although these types of laminates can be activated and extended to high elongations, they are not desirable because of the separation of the nonwoven from the elastic film during the activation step.

Some embodiments of this invention do not exhibit a well defined yield point. The bond between the nonwoven layer(s) and the elastic film may be strong enough such that the applied load is distributed across and along the entire gauge length of the sample. These embodiments may exhibit a "knee" in the stress-strain curve rather than a classical yield point usually defined as the point where the slope of the stress-strain curve reaches a value of zero. The stress induced into these samples rises gradually until they reach the break elongation point (E1) (see Fig. 3, curves B, C and D). These types of laminates can be activated to high elongations without a drastic separation of the nonwoven layer(s) from the elastic film. Some fibers will delaminate during the activation step, resulting in a material with more loft, softness and cloth-like feel.

For laminates that have too strong of a bond between the nonwoven layer(s) and the elastic film, the laminate will fail at a high load and a low elongation at break. The interaction between the nonwoven layer(s) and the elastic film is too high, thus inhibiting the ability of the laminate to be stretched to high elongations (see Fig. 3, curve A). These types of laminates are very limited in their use because of the inability to activate them at high elongations.

For those laminates where the nonwoven layer(s) could be peeled or separated from the attached elastic film, the elastic film following separation was tested for tensile properties. The load at 250% elongation was recorded. The force values obtained from the tensile test for the laminates were proportionally adjusted (normalized) to a nominal 90 µm thickness elastic film which, equates to a cross-sectional area of 0.023 cm² for a 2.54 cm wide sample. The force values were divided by the cross-sectional area to obtain stress values. S₁ and S₂ represent the stress at 100% and 250% respectively. S₂^{o} represents the stress at 250% for the elastic film of the laminate after separating the layers, (see Fig. 3, curve H). The ratio of S₂ divided by S₂^{o} expressed as a %, represents the increase in stress above the elastic film baseline S₂^{o}, that the laminate can withstand during drawing. Three replicates were tested and averaged and reported in Newtons/cm².

### Activation

The laminates of the invention were activated using the following procedure. A 76 mm x 76 mm piece of film, cut in the cross-direction, was mounted in a tensile testing machine (Instron™ Model 55R1122 available from the Instron Corp.) with the upper and lower jaws 76 mm apart. Line-contact jaws were used to minimize slip and breakage in the jaws. The jaws are then separated at a rate of 51 cm/min for 229 mm for 300% elongation and 114 mm for 150% elongation.. The jaws are then held stationary for 10 seconds after which they return to the zero elongation position.

### % Permanent Set

The % Permanent Set is used to help define the elastic properties of the laminates of the invention before and after activation of the laminates. A 25 mm x 102 mm piece of laminate, cut in the cross-direction, was mounted in a tensile testing machine (Instron™ Model 55R1122 available from the Instron Corp.) with the upper and lower jaws 51 mm apart. Line-contact jaws were used to minimize slip and breakage in the jaws. The jaws are then separated at a rate of 51 cm/min for 51 mm (100% elongation). The jaws are then held stationary for 60 seconds after which they return to the zero elongation position. The jaws are again held stationary for 60 seconds after which the sample was elongated again to 50% of its original length of 51 mm. The amount of permanent deformation in the sample is the distance that the upper jaw travels on the second pull before a load is recorded by the load cell. This distance divided by the original gauge length of 51 mm and multiplied by 100 is the Permanent Set and is reported as a percent in Tables 3 & 5. Three replicates were tested and averaged. Permanent Set was also measured on 150% activated material. A Permanent Set below 10% is an indication of good elasticity/recovery at 150% elongation.

### Film & Layer Thickness

The individual layers of the films of this invention are typically very thin (usually < 30 µm), and thus it can be difficult to measure their thicknesses by conventional photo-microscopy techniques. The thicknesses of the films were determined via weight and density calculations. A 25 mm x 152 mm strip of film was weighed to 4 decimal points on a Sartorius Analytic scale Model #A120S (Brinkman Instruments, Inc. Westbury, NY) and then dissolved in toluene for 24 hours. The block copolymer elastomeric components and polystyrene components are soluble in toluene, whereas, the polyolefin components are not soluble. The toluene solution was filtered through a Buchner™ funnel to collect the insoluble fraction on filter paper. The filter paper was dried for 1 hour at 70° C, allowed to equilibrate to room temperature for 1 hour, and then weighed to 4 decimal points on the above mentioned Sartorius Analytic scale. By using the weight (before and after dissolving), the area, and the density, layer thicknesses were calculated. The results are reported in µm in Table 1 below.

### Laminate Examples

### Comparative Example C1

A five layer laminate consisting of a three layer elastic film and two nonwoven layers was prepared on a coextrusion cast film lamination line shown schematically in FIG. 1 using 2 extruders to feed a Cloeren™ (Cloeren Co., Orange, TX) ABA feedblock. The A layers (skin layers) were extruded with a 25 mm diameter single screw extruder (24:1 L/D) manufactured by Killion Extruders (Davis-Standard Corp. Cedar Grove, NJ). Elvax 250 ethylene-vinylacetate copolymer was used for the A layers and was extruded at a melt temperature of 232° C and a screw speed of 52 RPM. The B layer (the elastomeric core) was extruded with a 6.35 cm diameter single screw extruder (32:1 L/D) manufactured by Davis-Standard (Pawcatuck, Connecticut). A blend of Shell KRATON™ 4150 SBS rubber with KRATON™ 1102 and Huntsman 207 polystyrene in a ratio of 89.9:3.4:6.7 was used for the B layer and was extruded at a melt temperature of 199° C and a screw speed of 30 RPM. The 3 layer film was extruded into a gapped nip formed with an upper matte metal roll (8° C) and a lower chrome roll (8° C). A gap of approximately 250 mils (6.35 mm) was used. Two separate layers of FPN-336 nonwoven were run into the nip, one on each side of the extruded film, such that a laminate was formed. The laminate was wrapped around the upper matte metal roll approximately 180°. A very low line tension (35 grams/cm (0.34 N/cm)) was used to provide a small, but sufficient amount of pressure to bond the nonwoven layers to the film layer. As a result of very low lamination pressure and poor adhesion between the nonwoven layers and film layer, a very low bond strength between the nonwoven layers and the film layer resulted, as seen in Table 2 below.

### Comparative Example C2

A five layer laminate was prepared as in Comparative Example C1 except Engage™ 8200 polyethylene was used for the A layers and KRATON™ 4150 SBS was used for the B layer. The A layers were extruded at a melt temperature of 232° C and a screw speed of 56 RPM. The B layer was extruded at a melt temperature of 199° C and a screw speed of 30 RPM. The nip was operated with a 250 mil (6.35 mm) gap such that no pressure was exerted to bond the layers together. A very low bond strength between the nonwoven layers and the film layer resulted, as seen in Table 2 below.

### Comparative Example C3

A five layer laminate was prepared as in Comparative Example C1 except Elvax 450 ethylene-vinylacetate copolymer was used for the A layers and KRATON™ 4150 SBS was used for the B layer. The A layers were extruded at a melt temperature of 232°C and a screw speed of 56 RPM. The B layer was extruded at a melt temperature of 199° C and a screw speed of 30 RPM. The nip was operated with a 250 mil (6.35 mm) gap such that no pressure was exerted to bond the layers together. A very low bond strength between the nonwoven layers and the film layer resulted, as seen in Table 2 below.

### Comparative Example C4

A five layer laminate was prepared as in Comparative Example C1 except Fina 3925 polypropylene was used for the A layers and a blend of KRATON™ 4433 SIS (20%), Vector 4211 SIS (65%), Huntsman 207 polystyrene (13%) and 70907 Clariant white concentrate (2%) was used for the B layer. The A layers were extruded at a melt temperature of 232° C and a screw speed of 35 RPM. The B layer was extruded at a melt temperature of 221° C and a screw speed of 51 RPM. The nip was operated in a closed position with a pressure of about 104 Newtons per lineal centimeter to firmly bond the layers together. A very high bond strength between the nonwoven layers and the film layer resulted as seen in Table 2 below. The individual layers of the laminate could not be peeled apart. The laminate was very stiff and exhibited a low elongation to break.

### Comparative Example C5

A five layer laminate was prepared as in Comparative Example C4. The nip was operated in a closed position with a pressure of about 66 Newtons per lineal centimeter to firmly bond the layers together. A very high bond strength between the nonwoven layers and the film layer resulted as seen in Table 2 below. The individual layers of the laminate could not be peeled apart. The laminate was very stiff and exhibited a low elongation to break as shown in Tables 2 and 3 below.

### Comparative Example C6

To demonstrate the extreme case where there is zero bond strength between the nonwoven layers and the film layer, a five layer sandwich was prepared by taking the extruded film of Comparative Example C5, and placing it by hand between two layers of FPN-336 nonwoven. The properties of this sandwich are shown in Tables 2 and 3.

### Comparative Example C7

A three layer laminate was prepared using the process shown schematically in Fig. 2. A blend of KRATON™ G1657 SEBS (80%) and Petrothene GA 601 LLDPE (20%) was used for the elastic layer and an 8.5 g/m² spunbond nonwoven was used for the two nonwoven layers. The elastic film was extruded at a melt temperature of approximately 215°C. A 19 mm diameter single screw extruder (24:1 L/D) available from Haake was used. The single layer film was extruded into a gapped nip formed with an upper rubber roll (10°C) and a lower chrome roll (10°C). The nip was operated with a gap of 40 mils (1 mm). The use of a spunbond nonwoven results in a laminate with low elongation to break as seen in Table 3 below.

### Comparative Example C8

A three layer laminate was prepared as in Example 4 except a blend of KRATON™ G1657 SEBS (80%) and Petrothene GA 601 LLDPE (20%) was used for the elastic layer and an oriented 31 g/m² carded polypropylene nonwoven was used for the two nonwoven layers. Prior to lamination, the nonwoven webs were oriented in the machine direction using heat and tension to neck the nonwoven from an original width of about 43 cm down to a width of 25 cm. The nip was operated with a gap of 40 mils (1 mm). The use of a necked nonwoven results in a laminate with high elongation to break and good S₂/S₁ ratio, however it has an S₁ of less than 300 N/cm. This material is more difficult to make as it requires an extra complex step of orienting the nonwoven layer(s).

### Example 1

A five layer laminate consisting of a three layer elastic film and two nonwoven layers was prepared on a coextrusion cast film lamination line shown schematically in FIG. 1 using 2 extruders to feed a Cloeren™ (Cloeren Co., Orange, TX) ABA feedblock. The A layers (skin layers) were extruded with a 38 mm diameter single screw extruder (24:1 L/D) manufactured by Davis-Standard Corp. (Pawcatuck, Connecticut). A blend of 7C12N PP/EPR copolymer (65%) and Vector 4211 SIS rubber (35%) was used for the A layers and was extruded at a melt temperature of 216° C and a screw speed of 7 RPM. The B layer (the elastomeric core) was extruded with a 63 mm diameter single screw extruder (34:1 L/D) manufactured by Davis-Standard Corp. (Pawcatuck, Connecticut). A blend of Vector 4211 SIS rubber (85%), Huntsman 207 polystyrene (13%) and 70907 Clariant white concentrate (2%) was used for the B layer and was extruded at a melt temperature of 216° C and a screw speed of 48 RPM. The 3 layer film was extruded into a gapped nip formed with an upper rubber roll (10° C) and a lower chrome roll (24° C). A gap of approximately 250 mils (6.35 mm) was used. Two separate layers of FPN-336 nonwoven were run into the nip, one on each side of the extruded film, such that a laminate was formed. The laminate was wrapped around the chrome roll approximately 180°. A very low line tension (13 g/m) was used to provide a small, but sufficient amount of pressure to bond the nonwoven layers to the film layer. A moderate bond strength between the nonwoven layers and the film layer resulted, as seen in Table 2 below.

### Example 2

A five layer laminate was prepared as in Comparative Example C1 except Fina 3925 polypropylene was used for the A layers and a blend of KRATON™ 4433 SIS (20%), Vector 4211 SIS (65%), Huntsman 207 polystyrene (13%) and 70907 Clariant white concentrate (2%) was used for the B layer. The A layers were extruded at a melt temperature of 232° C and a screw speed of 35 RPM. The B layer was extruded at a melt temperature of 221° C and a screw speed of 51 RPM. The nip was operated with a gap of about 250 mils (6.35 mm). The use of a skin layer of polypropylene in the elastic film improved the adhesion of the film to the polypropylene nonwovens even in the absence of any appreciable nip pressure. A moderate bond strength between the nonwoven layers and the film layer resulted as seen in Table 2 below.

### Example 3

A five layer laminate was prepared as in Example 2 except a blend of 55% SRD7-587 polypropylene and 45% Engage 8200 ULDPE was used for the A layers: The nip was operated with a gap of about 250 mils (6.35 mm). A moderate bond strength between the nonwoven layers and the film layer resulted, as seen in Table 2 below.

### Example 4

A three layer laminate was prepared as in Comparative Example C7 except the Regalrez 1126 was eliminated, resulting in a formulation of 80% KRATON G1657 and 20% Petrothene GA 601. The nip was operated with a gap of 40 mils (1 mm). The combination of no X nip pressure with moderate film to nonwoven adhesion, resulted in a moderate bond strength between the nonwoven layers and the film layer, as seen in Table 2 below.

### Example 5

A three layer laminate was prepared as in Comparative Example C7 except a blend of KRATON™ G1657 SEBS (80%) and Petrothene GA 601 LLDPE (20%) was used for the elastic layer and a 31 g/m² spunlaced polyester nonwoven was used for the two nonwoven layers. The nip was operated at a pressure of 5 psi (34 kPa).

The use of a spunlaced nonwoven results in a laminate with high elongation to break and good S₂/S₁ ratio as seen in Table 3 below.

### Example 6

A three layer laminate was prepared as in Example 8 except a blend of KRATON™ G1657 SEBS (80%) and Petrothene GA 601 LLDPE (20%) was used for the elastic layer and an 42.5 g/m² spunbond nonwoven was used for the two nonwoven layers. The nip was operated with a gap of 40 mil (1 mm).

### Example 7

A three layer laminate was prepared as in Comparative Example C7 using the process shown schematically in FIG. 2. A blend of KRATON™ G1657 SEBS (63%), Petrothene GA 601 LLDPE (20%), and Regalrez 1126 (17%) was used for the elastic layer. The nip was operated with a gap of 40 mil (1 mm).

**TABLE 1**

| **Laminate Sample** | **Skin & Core Composition** | **Total Film Thickness** **(µm)** | **Skin Thickness** **(µm)** |
|---|---|---|---|
| C1 | Skin: Elvax™ 250 Core: KRATON™ 4150 + KRATON™ 1102 + 207 Polystyrene (89.9:3.4:6.7) | 91 | 0.5 |
| C2 | Skin: Engage™ 8200 Core: KRATON™ 4150 | 94 | 2.1 |
| C3 | Skin: Elvax™ 450 Core: KRATON™ 4150 | 102 | 3.2 |
| C4 | Skin: Fina 3925 PP Core: KRATON™ 4433 + Vector™ 4211 + 207 PS + 70907 Clariant white (20:65:13:2) | 91 | 1.8 |
| C5 | Skin: Fina 3925 PP Core: KRATON™ 4433 + Vector™ 4211 + 207 PS + 70907 Clariant white (20:65:13:2) | 91 | 1.8 |
| C6 | Skin: Fina 3925 PP Core: KRATON™ 4433 + Vector™ 4211 + 207 PS + 70907 Clariant white (20:65:13:2) | 91 | 1.8 |
| C7 | Skin: none Core: KRATON™ G1657 + Petrothene™ GA 601 (80:20) | 89 | 0 |
| 1 | Skin: 7C12N + Vector™ 4211 (65:35) Core: Vector™ 4211 + 207 PS + 70907 Clariant white (85:13:2) | 81 | 1.3 |
| 2 | Skin: Fina 3925 PP Core: KRATON™ 4433 + Vector™ 4211 + 207 PS + 70907 Clariant white (20:65:13:2) | 94 | 2.3 |
| 3 | Skin: SRD7-587 PP + Engage™ 8200 (55:45) Core: KRATON™ 4433 + Vector™ 4211 + 207 PS + 70907 Clariant white (20:65:13:2) | 91 | 1.9 |
| 4 | Skin: none Core: KRATON™ G1657 + Petrothene™ GA 601 (80:20) | 89 | 0 |
| 5 | Skin: none Core: KRATON™ G1657 + Petrothene™ GA 601 (80:20) | 89 | 0 |
| 6 | Skin: none Core: KRATON™ G1657 + Petrothene™ GA 601 (80:20) | 89 | 0 |
| 7 | Skin: none Core: KRATON™ G1657 + Petrothene™ 601 + Regalrez™ 1126 (63:20:17) | 89 | 0 |

**TABLE 2**

| **Laminate Sample** | **Lamination Pressure** | **Internal Cohesion** **(kg/in**^{**2**}**),(N/cm**^{**2**}**)** | **Stress Decline** **(Y/N), %** | **Compression Stiffness** **(kg/cm),(N/cm)** |
|---|---|---|---|---|
| C1 | Open nip | 2.4, 3.6 | Y, 160 | 12.5, 122 |
| C2 | Open nip | 2.7,4.1 | Y, 80 | 11.1, 109 |
| C3 | Open nip | 1.8, 2.7 | Y, 110 | 10.8, 106 |
| C4 | 104 N/cm | 29, 44 | N | 87.9,861 |
| C5 | 66 N/cm | 21.5,33 | N | 70.1,687 |
| C6 | --- | 0.0, 0.0 | Y, 170 | 5.2,51 |
| C7 | Open nip | 3.5, 5.3 | Y, 70 | 16.2, 159 |
| 1 | Open nip | 6.2,9.4 | Y, 200 | 36.9, 362 |
| 2 | Open nip | 3.9,5.9 | Y, 120 | 23.9, 234 |
| 3 | Open nip | 5.1,7.7 | Y, 250 | 18.7, 183 |
| 4 | Open nip | 6.4,9.7 | Y, 220 | 27.6, 270 |
| 5 | 5 psi (34 kPa) | 15,22 | Y, 250 | 30.8,302 |
| 6 | Open nip | 3.3,5.0 | N | 53.8,527 |
| 7 | Open nip | 9.6, 15 | N | 40.1,393 |

**TABLE 3**

| STRESS-STRAIN PROPERTIES | | | | | | |
|---|---|---|---|---|---|---|
| **Laminate Sample** | **100% Stress** **S**_{**1**} **(N/cm**^{**2**}**)** | **250% Stress** **S**_{**2**} **(N/cm**^{**2**}**)** | **250% Stress** **S**_{**2**}^{**o**} **(N/cm**^{**2**}**)** | **(S**_{**2**}**/S**_{**1**}**) x 100** **(%)** | **(S**_{**2**}**/S**_{**2**}^{**o**}**) x 100** **(%)** | **Break Elongation E1** **(%)** |
| C1 | 453 | 78 | 72 | 17 | 108 | 854 |
| C2 | 243 | 100 | 78 | 41 | 128 | 848 |
| C3 | 291 | 82 | 76 | 28 | 108 | 847 |
| C4 | 1460 | * | * | * | * | 160 |
| C5 | 1310 | ^{*} | ^{*} | ^{*} | ^{*} | 195 |
| C6 | 662 | 254 | 197 | 38 | 129 | 670 |
| C7 | 633 | 477 | 330 | 75 | 145 | 566 |
| 1 | 644 | 644 | 282 | 100 | 228 | 849 |
| 2 | 390 | 457 | 197 | 117 | 232 | 520 |
| 3 | 564 | 792 | 161 | 140 | 492 | 850 |
| 4 | 722 | 1030 | 388 | 143 | 265 | 442 |
| 5 | 403 | 1040 | 330 | 258 | 315 | 583 |
| 6 | 1185 | 1430 | 330 | 121 | 433 | 267 |
| 7 | 737 | 983 | 206 | 133 | 477 | 268 |

| | | | | | | |
|---|---|---|---|---|---|---|
| * samples broke before reaching 250% elongation | | | | | | |

**TABLE 4**

| **Laminate Sample** | **Nonactivated Permanent Set (%)** | **150% Activated Permanent Set (%)** |
|---|---|---|
| C1 | 10 | 4.2 |
| C2 | 8.6 | 3.6 |
| C3 | 9.0 | 4.1 |
| C4 | 13 | * |
| C5 | 13 | * |
| C6 | 8.0 | 3.3 |
| C7 | 10 | 2.7 |
| 1 | 7.8 | 3.1 |
| 2 | 10 | 2.9 |
| 3 | 8.7 | 2.9 |
| 4 | 6.8 | 1.8 |
| 5 | 10 | 4.4 |
| 6 | 11 | 2.8 |
| 7 | 10 | 3.1 |

| | | |
|---|---|---|
| *Significant delamination occurred upon activation | | |

**TABLE 5**

| (300% Activated Laminates) | |
|---|---|
| **Laminate Sample** | **Internal Cohesion (kg/in**^{**2**}**) ((N/cm**^{**2**}**))** |
| C1 | * |
| C2 | 1.6 (2.4) |
| C3 | * |
| 1 | 3.4 (5.2) |
| 2 | 3.5 (5.3) |
| 3 | 3.4 (5.2) |
| 4 | 4.7 (7.1) |
| 5 | * |
| 6 | 0.7 (1.1) |
| 7 | 6.4 (9.7) |

| | |
|---|---|
| * samples completely delaminated during activation | |

### Materials

Fina 3925 homopolymer polypropylene 60 MFI, 0.900 density, available from Fina Oil & Chemical Co., Dallas, Texas.
Shell KRATON™ 4433 styrene-isoprene-styrene block copolymer rubber, 25 MFI, 0.92 density, 23% oil content, available from Shell Chemical Co., Houston, Texas.
Shell KRATON™ G1657 styrene-ethylenebutylene-styrene block copolymer rubber, 8.0 MFI, 0.90 density, available from Shell Chemical Co., Houston, Texas.
Shell KRATON™ 4150 styrene-butadiene-styrene block copolymer rubber, 19 MFI, 0.92 density, 33% oil content, available from Shell Chemical Co., Houston, Texas.
DuPont Elvax™ 450 polyethylene-co-vinylacetate 8.0 MI, 18% VA, 0.941 density, available from E.I. DuPont, Wilmington, Delaware.
DuPont Elvax™ 250 polyethylene-co-vinylacetate 25 MI, 28% VA, 0.951 density, available from E.I. DuPont, Wilmington, Delaware.
Dexco Vector™ 4111 styrene-isoprene-styrene block copolymer rubber, 12 MFI, 0.930 density, available from Dexco Polymers, Houston, Texas.
7C12N PP/EPR impact copolymer 20 MFI, 0.900 density, available from Union Carbide Corp., Danbury, Connecticut.
7C50 PP/EPR impact copolymer 8 MFI, 0.900 density, available from Union Carbide Corp., Danbury, Connecticut.
SRD7-587 PP/EPR impact copolymer 30 MFI, 0.900 density, available from Union Carbide Corp., Danbury, Connecticut.
Dexco Vector™ 4211 styrene-isoprene-styrene block copolymer rubber, 13 MFI, 0.940 density, available from Dexco Polymers, Houston, Texas.
DuPont-Dow Engage™ 8200 ULDPE ethylene-octene copolymer, 7.1 MI, 0.870 density, available from DuPont-Dow Elastomers, Wilmington, Delaware.
Petrothene™ GA 601 linear low density polyethylene, 0.918 Density, 1.0 MI, available from Equistar Chemicals, Houston, Texas.
Regalrez™ 1126 hydrogenated hydrocarbon tackifying resin available from Hercules Inc., Wilmington, Delaware.
Clariant 00070907 polystyrene/TiO₂ (75:25) white color concentrate available from Clariant Co., Minneapolis, Minnesota.
Huntsman 207 general purpose polystyrene, 15.5 MFI, 1.04 density, available from Huntsman Chemical Corp., Chesapeake, Virginia.
FPN-336 carded polypropylene nonwoven, 31 g/m², available from BBA Nonwovens, Simpsonville, South Carolina.
RFX 42.5 g/m² spunbond polypropylene available from Amoco Nonwovens.
HEF 140-070 31 g/m² spunlaced polyester available from Veratec.
17 g/m² polypropylene spunbond available from Veratec.

## Claims

1. An extrusion bonded nonwoven elastic film laminate comprising a elastomeric film having a thickness of 300 µm or less directly bonded to at least one nonwoven web layer substantially continuously over at least a portion of the laminate forming an extensible portion, the extensible portion being extensible in at least one direction, having an elongation to break of at least 250 percent, a stress (S₁) at 100 percent elongation of greater than 300 N/cm² and a useful extension range of greater than 100 percent elongation, wherein the nonwoven web is not a necked nonwoven web or preslit nonwoven.

2. An extrusion bonded nonwoven elastic film laminate of claim 1 wherein the elastomeric film is a multilayer film having at least one elastic layer.

3. The extrusion bonded nonwoven elastic film laminate of claim 1 wherein the elastomeric film has a stress at 250 percent elongation of less than 500 N/ cm² (S₂^{o}) and the ratio of S₂ to S₂^{o} is greater than 1.5, wherein S₂^{o} is the stress for the elastic film of the laminate after separating the layers at 250 percent elongation.

4. The extrusion bonded nonwoven elastic film laminate of claim 3 wherein the elastic film laminate has a stress at 250 percent elongation of greater than 400 N/cm²(S₂).

5. The extrusion bonded nonwoven elastic film laminate of claim 3 wherein the laminate has a useful extension range of greater than 150 percent elongation and an elongation to break of greater than 300 percent elongation.

6. The extrusion bonded nonwoven elastic film laminate of claim 4 wherein the ratio of S₂ to S₂^{o} is greater than 2.0.

7. The extrusion bonded nonwoven elastic film laminate of claim 5 wherein the elastomeric film has a thickness of from 20 to 300 µm.

8. The extrusion bonded nonwoven elastic film laminate of claim 1 wherein the laminate comprises an outer skin layer and wherein the outer skin layer is a semicrystalline or amorphous polymer bondable to a fiber in forming the nonwoven web.

9. The extrusion bonded nonwoven elastic film laminate of claim 1 wherein S₁ is less than 1200 N/cm².

10. The extrusion bonded nonwoven elastic film laminate of claim 4 wherein the S₂/S₁ ratio is greater than 1.0.

11. The extrusion bonded nonwoven elastic film laminate of claim 1 wherein the internal adhesion strength of the nonwoven layer to the elastic film is from 2 to 30 N/cm².

12. The extrusion bonded nonwoven elastic film laminate of claim 1 wherein the elastomeric film material does not substantially penetrate the interfibrous space of the nonwoven.

13. The extrusion bonded nonwoven elastic film laminate of claim 1 wherein the laminate has an elongation to break of greater than 350%.

14. A method of forming an extrusion bonded nonwoven elastic film laminate comprising providing at least one nonwoven web extruding onto the at least one nonwoven web an elastomeric film having a thickness of 300 µm or less at a pressure of less than 10 psi (69 kPa); while the elastomeric film is still in a heat softened state such that the film is directly bonded to a nonwoven web layer substantially continuously over at least a portion of the laminate forming an extensible portion, the extensible portion having an elongation to break of at least 250 percent and a stress at 100 percent elongation of greater than 300 N/cm² and a useful extension range of greater than 100 percent elongation, wherein the nonwoven web is not a necked nonwoven web or preslit nonwoven.

15. The method of forming an extrusion bonded nonwoven elastic film laminate of claim 14 wherein the elastomeric film has at least one layer formed predominantly of an ABA block copolymer elastomer wherein the A blocks are predominately monoalkylene arenes and the B blocks are predominately conjugated dienes.

16. The method of forming an extrusion bonded nonwoven elastic film laminate of claim 15 wherein the laminate comprises an outerskin layer and wherein the outer skin layer is a semicrystalline or amorphous polymer bondable to a fiber forming the nonwoven web.

17. The method of forming an extrusion bonded nonwoven elastic film laminate of claim 14 wherein the nonwoven web has a basis weight of from 10 to 60 g/m².

## Patentansprüche

1. Durch Extrusion verbundenes Laminat von elastischem Film und Vlies, umfassend einen Elastomer-Film mit einer Dicke von 300 µm oder weniger, der im Wesentlichen kontinuierlich über mindestens einen Abschnitt des Laminats unter Bildung eines dehnbaren Abschnitts direkt an mindestens eine Vliesbahnschicht gebunden ist, wobei der dehnbare Abschnitt in mindestens eine Richtung dehnbar ist, wobei der elastomere Film eine Reißdehnung von mindestens 250 Prozent, eine Spannung (S₁) bei 100 Prozent Dehnung von mehr als 300 N/cm² und einen nutzbaren Verlängerungsbereich von mehr als 100 Prozent Dehnung aufweist, wobei die Vliesbahn keine Vliesbahn Mit Einengung oder vorgeschnittenes Vlies ist.

2. Durch Extrusion verbundenes Laminat von elastischem Film und Vlies, nach Anspruch 1, wobei der elastomere Film ein mehrschichtiger Film ist, der mindestens eine elastische Schicht aufweist.

3. Durch Extrusion verbundenes Laminat von elastischem Film und Vlies, nach Anspruch 1, wobei der elastomere Film eine Spannung bei 250 Prozent Dehnung von weniger als 500 N/cm² (S₂^{o}) aufweist und das Verhältnis von S₂ zu S₂^{o} größer als 1,5 ist, wobei S₂^{o} die Spannung für das Laminat bei 250 Prozent Dehnung ist.

4. Durch Extrusion verbundenes Laminat von elastischem Film und Vlies, nach Anspruch 3, wobei das Laminat des elastischen Films eine Spannung bei 250 Prozent Dehnung von mehr als 400 N/cm² (S₂) aufweist.

5. Durch Extrusion verbundenes Laminat von elastischem Film und Vlies, nach Anspruch 3, wobei das Laminat einen nutzbaren Verlängerungsbereich von mehr als 150 Prozent Dehnung und eine Reißdehnung von mehr als 300 Prozent Dehnung aufweist.

6. Durch Extrusion verbundenes Laminat von elastischem Film und Vlies, nach Anspruch 4, wobei das Verhältnis von S₂ zu S₂^{o} größer als 2,0 ist.

7. Durch Extrusion verbundenes Laminat von elastischem Film und Vlies, nach Anspruch 5, wobei der elastomere Film eine Dicke von 20 bis 300 µm aufweist.

8. Durch Extrusion verbundenes Laminat von elastischem Film und Vlies, nach Anspruch 1, wobei das Laminat eine äußere Hautschicht umfasst und wobei die äußere Hautschicht ein semikristallines oder amorphes Polymer ist, dass bei der Bildung der Vliesbahn an eine Faser gebunden werden kann.

9. Durch Extrusion verbundenes Laminat von elastischem Film und Vlies, nach Anspruch 1, wobei S₁ kleiner als 1200 N/cm² ist.

10. Durch Extrusion verbundenes Laminat von elastischem Film und Vlies, nach Anspruch 4, wobei das S₂/S₁-Verhältnis größer als 1,0 ist.

11. Durch Extrusion verbundenes Laminat von elastischem Film und Vlies, nach Anspruch 1, wobei die innere Haftfestigkeit der Vliesbahn an dem elastischen Film von 2 bis 30 N/cm² beträgt.

12. Durch Extrusion verbundenes Laminat von elastischem Film und Vlies, nach Anspruch 1, wobei das elastomere Filmmaterial im wesentlichen nicht in den Faserzwischenraum des Vlieses eindringt.

13. Durch Extrusion verbundenes Laminat von elastischem Film und Vlies, nach Anspruch 1, wobei das Laminat eine Reißdehnung von mehr als 350% hat.

14. Verfahren zur Herstellung eines durch Extrusion verbundenen Laminats von elastischem Film und Vlies, umfassend Bereitstellen mindestens einer Vliesbahn, Extrudieren eines elastomeren Films mit einer Dicke von 300 µm oder weniger auf die mindestens eine Vliesbahn bei einem Druck von weniger als 10 psi (69 kPa), während der elastomere Film noch in einem durch Wärme weichgemachten Zustand ist, so dass der Film im Wesentlichen kontinuierlich über mindestens einen Abschnitt des Laminats unter Bildung eines dehnbaren Abschnitts direkt an eine Vliesbahnschicht gebunden wird, wobei der dehnbare Abschnitt eine Reißdehnung von mindestens 250 Prozent und eine Spannung bei 100 Prozent Dehnung von mehr als 300 N/cm² und einen nutzbaren Verlängerungsbereich von mehr als 100 Prozent Dehnung aufweist, wobei die Vliesbahn keine Vliesbahn mit Einengung oder vorgeschnittenes Vlies ist.

15. Verfahren zur Herstellung eines durch Extrusion verbundenen Laminats von elastischem Film und Vlies, nach Anspruch 14, wobei der elastomere Film mindestens eine Schicht aufweist, die vorwiegend aus einem ABA-Blockcopolymer-Elastomer hergestellt ist, wobei die A-Blöcke vorwiegend Monoalkylenarene sind und die B-Blöcke vorwiegend konjugierte Diene sind.

16. Verfahren zur Herstellung eines durch Extrusion verbundenen Laminats von elastischem Film und Vlies, nach Anspruch 15, wobei das Laminat eine äußere Hautschicht umfasst und wobei die äußere Hautschicht ein semikristallines oder amorphes Polymer ist, das unter Bildung der Vliesbahn an eine Faser gebunden werden kann.

17. Verfahren zur Herstellung eines durch Extrusion verbundenen Laminats von elastischem Film und Vlies, nach Anspruch 14, wobei die Vliesbahn ein Flächengewicht von 10 bis 60 g/m² aufweist.

## Revendications

1. Stratifié de film élastique non tissé assemblé par extrusion comprenant un film élastomère ayant une épaisseur de 300 µm ou moins, assemblé directement sur au moins une couche de bande de non-tissé essentiellement en continu sur au moins une partie du stratifié formant une partie extensible, la partie extensible étant extensible dans au moins une direction, ayant un allongement à la rupture d'au moins 250 pour cent, une charge (S₁) à 100 pour cent d'allongement supérieure à 300 N/cm² et une gamme d'extension utile supérieure à 100 pour cent d'allongement, dans lequel la bande de non-tissé n'est pas une bande de non-tissé à étranglement ou une bande de non-tissé à fente prédécoupée.

2. Stratifié de film élastique non tissé assemblé par extrusion selon la revendication 1, dans lequel le film élastomère est un film multicouche possédant au moins une couche élastique.

3. Stratifié de film élastique non tissé assemblé par extrusion selon la revendication 1, dans lequel le film élastomère a une charge à 250 pour cent d'allongement inférieure à 500 N/cm² (S₂^{o}) et le rapport S₂/S₂^{o} est supérieur à 1,5, où S° est la charge à 250 pour cent d'allongement pour le stratifié.

4. Stratifié de film élastique non tissé assemblé par extrusion selon la revendication 3, dans lequel le stratifié de film élastique a une charge à 250 pour cent d'allongement supérieure à 400 N/cm² (S₂).

5. Stratifié de film élastique non tissé assemblé par extrusion selon la revendication 3, dans lequel le stratifié a une gamme d'extension utile supérieure à 150 pour cent d'allongement et un allongement à la rupture supérieur à 300 pour cent d'allongement.

6. Stratifié de film élastique non tissé assemblé par extrusion selon la revendication 4, dans lequel le rapport S₂/S₂^{o} est supérieur à 2,0.

7. Stratifié de film élastique non tissé assemblé par extrusion selon la revendication 5, dans lequel le film élastomère a une épaisseur de 20 à 300 µm.

8. Stratifié de film élastique non tissé assemblé par extrusion selon la revendication 1, dans lequel le stratifié comprend une couche de peau externe et dans lequel la couche de peau externe est un polymère semi-cristallin ou amorphe pouvant être collé à une fibre formant la bande de non-tissé.

9. Stratifié de film élastique non tissé assemblé par extrusion selon la revendication 1, dans lequel S₁ est inférieur à 1 200 N/cm².

10. Stratifié de film élastique non tissé assemblé par extrusion selon la revendication 4, dans lequel le rapport S₂/S₁ est supérieur à 1,0.

11. Stratifié de film élastique non tissé assemblé par extrusion selon la revendication 1, dans lequel la force d'adhérence interne de la couche de non-tissé sur le film élastique est de 2 à 30 N/cm².

12. Stratifié de film élastique non tissé assemblé par extrusion selon la revendication 1, dans lequel le matériau du film élastomère ne pénètre pratiquement pas dans l'espace entre les fibres du non-tissé.

13. Stratifié de film élastique non tissé assemblé par extrusion selon la revendication 1, dans lequel le stratifié possède un allongement à la rupture supérieur à 350%.

14. Procédé permettant de former un stratifié de film élastique non tissé assemblé par extrusion comprenant le fait de se procurer au moins une bande de non-tissé, d'extruder sur la au moins une bande de non-tissé un film élastomère ayant une épaisseur de 300 µm ou moins à une pression inférieure à 10 psi (69 kPa), alors que le film élastomère est encore dans un état ramolli à la chaleur, de telle sorte que le film soit directement assemblé sur une couche de bande de non-tissé d'une manière essentiellement continue au moins sur une partie du stratifié formant une partie extensible, la partie extensible ayant un allongement à la rupture d'au moins 250 pour cent et une charge à 100 pour cent d'allongement supérieure à 300 N/cm² et une gamme d'extension utile supérieure à 100 pour cent d'allongement, dans lequel la bande de non-tissé n'est pas une bande de non-tissé à étranglement ou une bande de non-tissé à fente prédécoupée.

15. Procédé permettant de former un stratifié de film élastique non tissé assemblé par extrusion selon la revendication 14, dans lequel le film élastomère possède au moins une couche formée principalement d'un élastomère de copolymère séquencé ABA, où les blocs A sont principalement des monoalkylène-arènes et les blocs B sont principalement des diènes conjugués.

16. Procédé permettant de former un stratifié de film élastique non tissé assemblé par extrusion selon la revendication 15, dans lequel le stratifié comprend une couche de peau externe et dans lequel la couche de peau externe est un polymère semi-cristallin ou amorphe pouvant être collé à une fibre formant la bande de non-tissé.

17. Procédé permettant de former un stratifié de film élastique non tissé assemblé par extrusion selon la revendication 14, dans lequel la bande de non-tissé a un grammage de 10 à 60 g/m².
